# EUROPEAN PATENT APPLICATION

(11) **EP 1 236 630 A1**
(43) Date of publication of application: **04.09.2002**
(21) Application number: 01600014.3
(22) Date of filing: 01.06.2001
(51) Int. Cl.: B60S 9/08

(54) **Mechanical or electric lifting system for automobile**

(30) Priority: 20.02.2001 GR 2001100094
(71) Applicant: Terzis, Georgios, 231 00 Sparti (GR)
(72) Inventor: Terzis, Georgios, 231 00 Sparti (GR)
(74) Representative: Tsakoulia, Panagiota

(57) **Abstract**

The lifting of a car can be achieved simply by two identical mechanisms each of which uses a motion screw (2).

These two mechanisms are independent from each other and are located on both left and right sides of the car. The motion is transferred by a crank handle or by an electric motor. The circular motion is changed into lifting or lowering movement with the help of the motion screw (2) and of a screw nut (3).

## Description

This invention refers to a lift system situated properly on an automobile and composed of two identical components independent from each other, which are situated on both the left and right side of the automobile. With the help of these two automobile lift components we have the ability to elevate an automobile.

In order to elevate an automobile in situations such as to change a tire or rise out of sand or mud etc. is now achieved by using a hand held jack, which all automobiles have. In order to correctly and safely use a jack to elevate an automobile we must first : a) have knowledge of how to use it b)have skill and experience in order to place it correctly especially when used on ground with a slope c) substantial muscle strength while working d) enough time which sometimes is precious. Finally we must take into consideration the. possible soiling of hands and clothes from the parts of the jack which are covered with grease.

For all these reasons the use of a classic jack today results in an unpleasant problem for many people who seek easy and simple solutions having safety in mind.

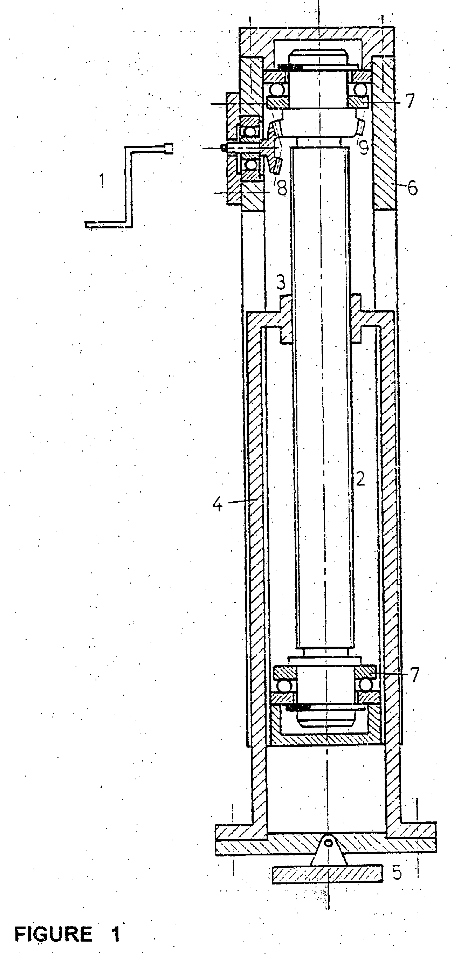

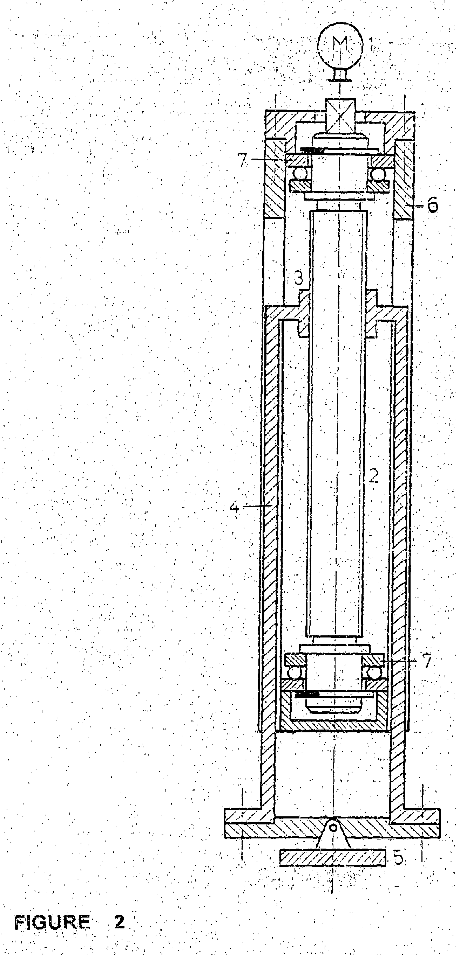

This invention has the intention of improving the disadvantages above. One needs to do nothing more than adjust properly the wrench (1) (figure 1) or function the electromotor. Without any effort and avoiding contact with any other part of the system we can achieve the elevation of the vehicle safely even on grounds with a slope. All this is done quickly and effortlessly.

Figure (1) shows one of the two parts which compose the motor operated part of the car lift. The circular motion of the removable wrench (1) is transmitted by the cone shaped toothed wheel (8) to the specially shaped section (9) of the screw movement (2) which brings about itself conic teeth. From there this circular motion changes to a straight up down movement with the help of the screw movement (2) which is a spiral trape-zoid and the screw nut (3) which work together resulting in the elevating or lowering of the automobile.

The screw nut (3) is situated stably with the two rods with rectangular dimensions (4) which end up in the special footing (5) which has the ability to circle around its central support in a way that it is able to stabilize a car high with safety even on grounds with a slope.

The rods (4) move up and down as the lifting or lowering of the automobile in to specially designed cavities of the shell of the lift system.

The screw movement (2) is supported steadily on the shell of the mechanism (6) by two simple ball bearing axial disk shaped moving base.

In figure (2) it shows one of the two identical parts which composes the electric version of the car lift. The circular motion of the exit axle of the electric motor (1) is transferred directly to the motion screw (2) which has a spiral trapezoid and with the help of the screw nut (3) and rods (4) the circular motion changes to a straight up down movement resulting in the elevating or lowing of the vehicle.

The screw nut (3) is situated stably with the two rods with rectangular dimensions (4) which end up in the special footing (5) which has the ability to circle around its central support in a way that is able to stabilize a car high with safety even on grounds with a slope.

The rods (4) move up and down as the lifting or lowering of the automobile in two specially designed cavities of the shell of the lift system.

The screw movement (2) is supported steadily on the shell of the mechanism (6) by two simple ball bearing axial disk shaped moving base (7).

## Claims

1. The car lift is composed of two identical mechanisms each of which is one removable wrench (1) or an electric motor (2). From there 5 the circular motion changes to a straight up down movement with the help of a motion screw (2) which is spiral trapezoid and a screw nut (3)which is steadily connected to the rods (4) resulting in the elevation or lowering of the vehicle.
The car lift is characteristic in that the two mechanisms which it is made up of are independent between them and can work simultaneously or individually.

2. The lift system according with capability 1 is characteristic in that the two parts of the system are placed on both left and right side of the car and that the special footing (5) and rods (4) have the ability to revolve around its central support in a way that they can stabilize a car safely high even on grounds with a slope.
